# FASCICULE DE BREVET EUROPEEN

(11) **EP 2 102 305 B1**
(45) Date de publication et mention de la délivrance du brevet: **22.01.2014**
(21) Numéro de dépôt: 07871811.1
(22) Date de dépôt: 07.12.2007
(51) Int. Cl.: C09K 8/584

(54) **RECUPERATION ASSISTEE DE PETROLE**
VERBESSERTE ROHÖLFÖRDERUNG
ENHANCED CRUDE OIL RECOVERY

(30) Priorité: 22.12.2006 FR 0611263
(43) Date de publication de la demande: 23.09.2009
(73) Titulaire: Rhodia Opérations, 93306 Aubervilliers (FR)
(72) Inventeur: MORVAN, Mikel, F-78240 Aigremont (FR); LANNIBOIS DREAN, Hélène, F-94220 Charenton Le Pont (FR); BENDEJACQ, Denis, F-75005 Paris (FR)
(74) Mandataire: Cordier, Pascal Christian
(86) Numéro de dépôt international: PCT/FR2007/002016
(87) Numéro de publication internationale: WO 2008/090267

(56) Documents cités:
- GB-A- 2 141 731
- US-A- 3 811 505
- US-A- 4 008 165
- US-A- 4 278 129

## Description

La présente invention concerne l'utilisation d'esters phosphates en tant que tensioactifs dans la technique de récupération assistée du pétrole brut des formations souterraines. L'invention concerne aussi des formulations utilisables pour des méthodes de récupération assistée du pétrole, destinée à être mises en contact avec les roches des formations souterraines.

### ART ANTÉRIEUR

Dans le cadre de la production de pétrole brut, ou huile, des formations souterraines, il existe différentes méthodes pour optimiser l'extraction d'huile originale en place, en anglais OOIP pour original oil in place.

La méthode de production primaire de pétrole brut consiste, une fois le puits foré, à récupérer le pétrole brut par migration du pétrole de la formation de roche ou du sable, vers un puits de plus basse pression, puis le pomper vers la surface, via un puits « producteur ». La production primaire est de ce fait la méthode la moins chère d'extraction. On récupère typiquement seulement 10 à 15 % d'OOIP. Néanmoins, au fur et à mesure que le pétrole est pompé, la pression diminue et l'extraction devient plus difficile.

Des méthodes secondaires de production sont alors employées quand la pression souterraine devient insuffisante pour déplacer le pétrole restant.

La technique la plus commune, l'inondation (waterflooding) utilise des puits d'injecteurs qui poussent de grands volumes de l'eau sous pression dans la zone contenant le pétrole. Lors de sa migration de la zone vers un ou plusieurs puits producteur(s), l'eau injectée entraîne une partie du pétrole qu'elle rencontre. A la surface, le pétrole est séparé de l'eau injectée, et l'eau est de nouveau injectée. L'inondation permet de récupérer des 10 à 30 % additionnel d'OOIP.

Quand le waterflooding atteint le point où la production n'est plus rentable, une décision doit être prise : le changement de champs pur et simple, ou le recours à une autre phase d'exploitation. On peut alors utiliser une technique de récupération assistée utilisant l'inondation dans laquelle l'eau comprend des agents tensioactifs (surfactantflooding). Ces tensioactifs, dispersibles dans l'eau, au contact avec le pétrole contenu dans la roche ou le sable, abaissent la tension interfaciale eau/huile, pour permettre d'entraîner l'huile piégée dans les constrictions de pores. Cette technique connue de la littérature qui conduirait à récupérer 15 à 25 % additionnels d'OOIP n'a jamais été employée industriellement. Bien que relativement plus chère que les autres techniques de production, cette technique deviendra indispensable pour exploiter au maximum un gisement déjà découvert, notamment au vu de la hausse du prix du pétrole.

Il existe ainsi un besoin de mettre en évidence des agents tensioactifs, utilisés pour la technique de récupération assistée du pétrole, permettant d'accroître plus encore la quantité d'OOIP extraite.

Toutefois, l'abaissement de la tension interfaciale eau/huile varie suivant de nombreux paramètres, tels que notamment la salinité de l'eau, la température et le pH. Il en résulte que la récupération d'OOIP peut varier considérablement selon ces conditions.

Les tensioactifs les plus envisagés pour les techniques de récupérations assistées sont les tensioactifs de type sulfonate. Toutefois, ces tensioactifs montrent leur limitent quand ils sont utilisés dans des conditions extrêmes, notamment à des salinité supérieures à 100 g/l.

Il existe ainsi un besoin de mettre en évidence des agents tensioactifs capables, dans des conditions larges de températures et de salinités d'abaisser la tension interfaciale eau/huile quelles que soient les conditions afin d'optimiser au mieux l'OOIP.

### INVENTION

La demanderesse a mise en évidence de manière tout a fait surprenante que certains esters phosphates permettaient d'abaisser de manière importante la tension interfaciale eau/huile, de façon à décoller très efficacement l'huile de la roche ou du sable et d'optimiser l'extraction d'huile originale en place. Il apparaît que de manière très intéressante, ces tensioactifs opèrent notamment dans de larges gammes de salinités et de températures, notamment dans des conditions extrêmes de températures, notamment supérieures à 70°C, et de salinité, notamment jusqu'à 200 g/l.

Ces tensioactifs de type alkyl ester phosphate répondent aux formules suivantes :

RO(C₃H₆O)ₓ-(C₂H₄O)_{y}-P(=O)(OM)₂ (I)

et/ou

[RO(C₂H₆O)ₓ-(C₂H₄O)_{y}]₂-P(=O)(OM) (II)

dans lesquelles :
- R est une chaîne hydrocarbonée aliphatique, linéaire ou branchée, cyclique ou aromatique, saturée ou insaturée, pouvant comprendre des hétéroatomes, notamment P, S, N ou O ;
- x est compris en moyenne entre 0 et 20,
- y est compris en moyenne entre 3 et 9,
- M est H, un métal alcalin tel que Na ou K, ou une base organique.

On peut ainsi utiliser un monoalkyl ester phosphate de formule (I), un dialkyl ester phosphate de formule (II) ou un mélange des composés de formules (I) et (II).

L'invention a pour principal objet l'utilisation d'au moins un ester phosphate de formule (I) et/ou (II) en tant que tensioactif dans la technique de récupération assistée du pétrole.

La présente invention consiste également en une méthode de récupération assistée du pétrole d'une formation souterraine dans laquelle on injecte dans ladite formation un fluide comprenant au moins un tensioactif de type ester phosphate de formule (I) et/ou (II), et l'on conduit ledit fluide à travers cette formation pour déplacer le pétrole de la formation et le récupérer.

L'invention consiste plus particulièrement en une méthode de récupération assistée du pétrole d'une formation souterraine comprenant au moins les étapes suivantes :
a) on injecte, par au moins un moyen d'injection en contact avec la formation souterraine, un liquide comprenant au moins :
   - i) un milieu aqueux,
   - ii) un tensioactif de type ester phosphate de formule (I) et/ou (II), et
   - iii) éventuellement un co-tensioactif
b) on récupère, par au moins un moyen de production, ledit liquide comprenant le pétrole.

L'invention concerne aussi une formulation, notamment apte à la récupération assistée du pétrole comprenant au moins un liquide aqueux, un tensioactif de type ester phosphate de formule (I) et/ou (II), et éventuellement un co-tensioactif.

On utilise au sens de l'invention la dénomination pétrole brut ou huile de manière similaire.

On utilise au sens de l'invention la dénomination microémulsion ou Winsor III de manière similaire.

On entend au sens de l'invention par méthode de récupération assistée du pétrole (ou EOR pour enhanced oil recovery), une technique de récupération du pétrole brut d'une formation souterraine utilisant l'inondation dans laquelle l'eau comprend des agents tensioactifs (surfactantflooding).

Au contact avec une huile possiblement contenue dans la formation souterraine, des tensioactifs convenablement choisis se distribuent entre l'eau, le pétrole et une troisième phase, dite microémulsion ou Winsor III, combinant eau, huile et tensioactif à l'interface. Dans un système de type Winsor III, il est connu que la tension interfaciale entre l'huile et la phase aqueuse est très basse. L'existence d'une microémulsion (ou Winsor III) dans un mélange ternaire eau/huile/tensioactif, est donc une preuve, a posteriori, qu'un tensioactif est capable de diminuer significativement la tension interfaciale eau/huile : ceci permet en pratique d'extraire l'huile piégée dans la porosité de la roche, la haute tension interfaciale étant en effet une des limitations au déplacement de l'huile, et donc à sa récupération.

Les composés selon l'invention permettent d'obtenir un diagramme de phase ternaire présentant une Winsor III, dans de nombreuses conditions de salinité, de température et de pH. On obtient généralement des microémulsions ayant une tension interfaciale eau/huile inférieure ou égale à 10⁻² mN/m à 25°C.

L'utilisation des microémulsions et la diminution significative de la tension interfaciale eau/huile pour la récupération assistée du pétrole est bien connue. On peut citer à cet effet: Bourrel M, 1988, "Microemulsions and related systems : formulation, solvency and physical-chemistry properties", Surfactant Science Series, Marcel Dekker ; Chapotin D et al., 1986, "The Chateaurenard (France) industrial microemulsion pilot design and performance", SPE, 14, 955 ; Levitt D.B et al. 2006 "Identification and evaluation of high performance EOR surfactants" SPE, 100089.

On peut ainsi utiliser un monoalkyl ester phosphate de formule (I), un dialkyl ester phosphate de formule (II) ou un mélange des composés de formules (I) et (II). La proportion en poids dans le mélange réactionnel final entre le monoalkyl ester phosphate de formule (I) et de dialkyl ester phosphate de formule (II), est généralement contrôlée par le mode de synthèse des alkyls esters phosphates.

Les esters phosphates de l'invention peuvent notamment être synthétisés en faisant réagir un alcool de formule R-OH, avec de l'anhydride phosphorique. Pour obtenir des compositions enrichies en monoalkyl ester phosphates, on peut dissoudre une solution d'acide phosphorique dans un alcool organique en se maintenant dans des conditions non réactives, puis ajouter à ce mélange de l'anhydride phosphorique, et ensuite procéder à la réaction en température. Les esters phosphates de l'invention peuvent notamment être synthétisés par la méthode mentionnée dans la demande EP0675076.

Préférentiellement, on utilise un ratio en poids de monoalkyl ester phosphate de formule (I) par rapport au dialkyl ester phosphate de formule (II) généralement compris entre 80/20 et 20/80. La concentration molaire totale en phosphore peut être obtenue par titrage acido-basique des fonctions phosphates. Le rapport (molaire) monoalkyl / dialkyl peut être mesuré par résonance magnétique nucléaire du ³¹P.

Il est également possible d'utiliser plusieurs monoalkyl esters phosphates de formule (I), ou plusieurs dialkyl esters phosphates de formule (II) ou un mélange de ces composés de formules (I) et (II).

La chaîne hydrocarbonée R peut être du type alkyle, alkényle, cycloalkyle, aryle, alkyle aryle, aryle alkyle. La chaîne hydrocarbonée R peut comprendre de 1 à 30 atomes de carbone, et peut éventuellement comprendre des hétéroatomes, notamment P, S, N ou O, et/ou des groupements substitués. La chaîne hydrocarbonée R est préférentiellement une chaîne aliphatique hydrocarbonée comprenant 6 à 30 atomes de carbone, préférentiellement entre 8 et 18. On peut citer à titre d'exemple une chaîne linéaire comprenant 9 ou 10 atomes de carbone, notée C9 ou C10, ou une chaîne ramifiée de 13 atomes de carbone, tel que l'isotridécyl.

Les valeurs x et y correspondent au nombre moyen de groupements propoxy ou éthoxy respectivement, des composés selon l'invention. Ces valeurs sont dites moyennes dans le sens ou l'on peut avoir une dispersion de ces valeurs pour lesdits composés. Pour une valeur moyenne de x ou y, un composé peut comprendre de 1 à 2x, ou 1 à 2y, de groupements propoxy ou éthoxy.

On peut parfaitement mesurer la valeur moyenne de x et y par des techniques classiques connus de l'homme de l'art, tel que par exemple par RMN du proton ou du carbone.

x est préférentiellement compris entre 0 et 10, et plus préférentiellement compris entre 0 et 4. y est préférentiellement compris entre 2 et 12, plus préférentiellement compris entre 3 et 9, notamment 3, 4, 5, 6, 7, ou 8, ou n'importe quelles valeurs dans ces intervalles.

M peut être une base organique, notamment un dérivé aminé, tel que par exemple la triéthylamine, la diméthylcyclohexylamine, ou l'aminométhylpropanol.

La structure moléculaire des tensioactifs de l'invention affecte la capacité à former un système de type Winsor III dans des mélanges eau salée-huile. Il est parfaitement possible, dans le but de réduire la tension interfaciale eau/huile, de jouer sur la longueur de la chaîne hydrocarbonée R, le rapport monoester-diester, le nombre moyen d'éthoxylation et de propoxylation, la neutralisation de la fonction phosphate, notamment pour faire varier la capacité de solubilisation d'huile dans une large gamme de températures et de salinités.

Les alkyl esters phosphates de l'invention sont préférentiellement choisis dans le groupe comprenant les composés de formule (I) et/ou (II) mentionnés dans le tableau suivant:

| | **R** | **x** | **y** | **M** |
|---|---|---|---|---|
| 1 | isotridecyl | 0 | 5,7 | H |
| 2 | isotridecyl | 0 | 9,0 | H |
| 3 | isotridecyl | 0 | 3,0 | H |
| 4 | C9 | 0 | 4,4 | H |
| 5 | C10 | 0 | 5,4 | H |
| 6 | isotridecyl | 2 | 9 | H |
| 7 | C16-C18 | 0 | 5 | triéthanolamine |
| 8 | isotridecyl | 2 | 6 | H |

Lorsqu'on utilise un mélange de plusieurs monoalkyl esters phosphates de formule (I), ou plusieurs dialkyl esters phosphates de formule (II) ou un mélange de ces composés de formules (I) et (II), on peut envisager d'utiliser un mélange des composés 1 et 3 du tableau précédent.

Comme explicité précédemment, les méthodes de récupération assistée du pétrole d'une formation souterraine classiquement utilisées consistent à injecter par au moins un moyen d'injection en contact avec la formation souterraine, un liquide comprenant au moins des tensioactifs et à récupérer, par au moins un moyen de production, ledit liquide comprenant le pétrole.

Un tel procédé est parfaitement connu en lui-même et est mentionné notamment dans le brevet US3983940.

La méthode selon l'invention peut être utilisée pour extraire le pétrole brut de diverses formations souterraines, notamment à partir de plateforme maritimes ou à même le sol. On peut notamment citer les formations souterraines à base de roches mouillables à l'eau.

Dans le cadre de la récupération assistée de pétrole, on injecte dans la formation souterraine un liquide comprenant au moins un milieu aqueux, un tensioactif de l'invention et éventuellement un co-tensioactif.

Le milieu aqueux peut notamment être de l'eau de mer naturelle ou synthétique, notamment d'une salinité de l'ordre de 35 g/L de sels mono et divalents comme NaCl, KCI, CaCl₂ et MgCl₂. L'eau de formation contenue dans la roche, peut, elle, présenter une salinité comprise entre 35 et 200 g/l de sels mono et divalents comme NaCl, KCl, CaCl₂ et MgCl₂.

La formulation que l'on injecte peut comprendre de 0,05 à 5 % en poids de tensioactifs de l'invention.

La formulation peut éventuellement comprendre un co-tensioactif. Ces co-tensioactifs peuvent être par exemple des alcools, tels que des alcools aliphatiques linéaire ou ramifiés, des alcools éthoxylés, des alcools éthoxylés sulfatés, alcools éthoxylés sulfonatés, des phénols éthoxylés, et des phénols éthoxylés sulfatés. On peut notamment citer l'isobutanol ou l'hexanol.

On peut également utiliser dans la formulation des polymères viscosants tel que de la gomme de xanthane, des guar naturelles ou modifiées, des polyacrylamides hydrolysés, des copolymères l'acide 2-acrylamido-2-méthylpropane-sulfonique (AMPS).

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les composés utilisés sont les suivants :
- TA1 (Rhodafac RS 610) : Mélange à 70/30 en poids d'esters phosphates de formules (I) et (II) respectivement, avec R=isotridecyl, x=0, y=5,7, M=H.
- TA2 (Rhodafac RS 710) : Mélange à 70/30 en poids d'esters phosphates de formules (I) et (II) respectivement, avec R=isotridecyl, x=0, y=9,0, M=H.
- TA3 (Rhodafac RS 410) : Mélange à 70/30 en poids d'esters phosphates de formules (1) et (II) respectivement, avec R=isotridecyl, x=0, y=3,0, M=H.

Les Rhodafac RS sont des produits vendus par la société Rhodia.

### Exemple 1 : test de solubilité

Les tensioactifs de l'invention sont solubles dans l'eau salée, et cette solubilité est stable à différentes températures.

La stabilité de la solubilité est mesurée à 25°C, 50°C ou 70°C d'une solution comprenant 1 % en poids de TA1 ou TA2 dans une eau de mer synthétique à 24,8 g/l de NaCl, 11,8 g/l de MgCl₂, 0,8 g/l de KCI, 1,6 g/l de CaCl₂.

On observe que les deux solutions sont parfaitement stables aux différentes températures.

### Exemple 2 : Microémulsion en fonction du taux de sel

On prépare dans un tube un mélange de 4 % en poids de sec-butanol (cotensioactif), 2 % en poids de TA1 et un mélange de 50 % eau de mer synthétique (% volumique sur la masse totale restante) et de 50 % d'huile de vaseline (% volumique sur la masse totale restante), pour une masse totale de 3 g.

On observe l'apparition d'un système de type Winsor III avec différentes taux de sels de l'eau de mer synthétique : 35 à 50 g/l de sels à température ambiante.

### Exemple 3 : Utilisation de différents tensioactifs

Différents tensioactifs selon l'invention peuvent être utilisées en combinaison pour obtenir une microémulsion.

On prépare dans un tube un mélange des différents composés comme mentionné dans le tableau 1 suivant (en gramme, pour un total de 3 g), et on observe l'apparition d'un système de type Winsor III.

**Tableau 1**

| | **Eau de mer (39 g/l)** | **Huile de vaseline** | **Sec butanol** | **TA1** | **TA3** | **Etat** |
|---|---|---|---|---|---|---|
| **Echantillon A** | 1,462 | 1,265 | 0,172 | 0,061 | 0,03 | Winsor III |
| **Echantillon B** | 1,467 | 1,274 | 0,173 | 0 | 0,09 | Winsor III |

### Exemple 4 : Microémulsion en fonction du taux de sel en utilisant différents tensioactifs

Dans un volume total Vo fait d'un mélange 50/50 eau salée + huile de vaseline, on disperse 3% en poids de tensioactifs et 6 % en poids de sec-butanol ; la salinité est variable (37g/l, 50g/l, 75g/l, 100g/l, 125g/l) et le tensioactif est un mélange de TA1 et TA3 ; le ratio total de tensioactifs reste fixe (3 %) et il y a 3 ratios TA1/(TA1+TA3) adoptés (0,66, 0,5, et 0,33). Les mélanges se font à un pH de 1,3 qui est le pH acide naturel imposé par le tensioactif en sortie de synthèse).

Ces 15 échantillons sont ensuite analysés à température ambiante : on regarde s'il y a apparition de phase Winsor III, et on en mesure le volume Vµe de la microémulsion, qui est transformé en pourcentage volumique de microémulsion Φ = Vµe/Vo x100 (Vo désigne le volume total de la formulation comprenant l'eau, l'huile et le tensioactif et co-tensioactif).

Le Tableau 2 ci-dessous montre le pourcentage de phase Winsor III (valeur Φ) générée à une température de 25°C:

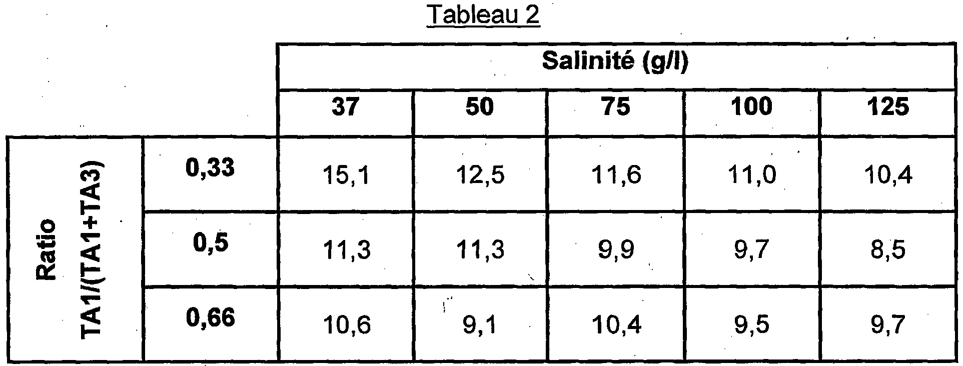

Le Tableau 3 ci-dessous montre le pourcentage de phase Winsor III (valeur Φ) générée à une température de 50°C :

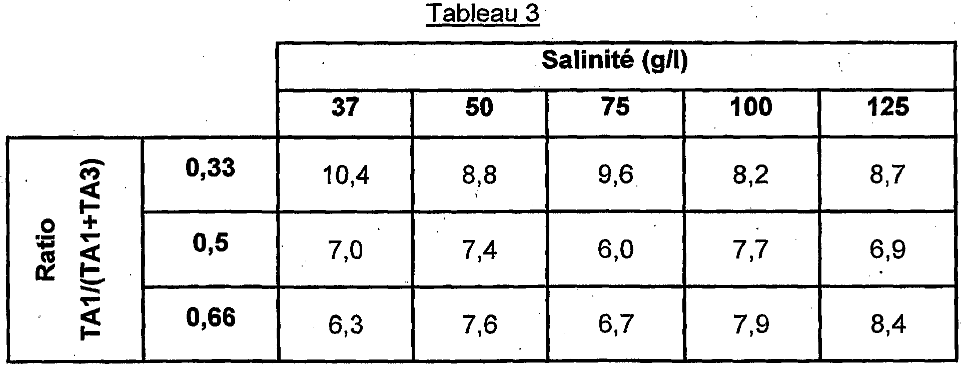

On observe que le mélange TA1 et TA3 forme un système de type Winsor III sur l'ensemble de la gamme de salinité, sur l'ensemble de la gamme de températures entre 25 et 50°C.

### Exemple 5 : Microémulsion en fonction du pH

On réalise les expériences suivantes : dans un volume total Vo fait d'un mélange 50/50 eau salée + huile de vaseline, on disperse 3 % en poids de TA1 seul et 6 % en poids de sec-butanol ; la salinité est variable (37g/l, 50g/l, 75g/l, 100g/l, 125g/l) et le pH de la solution est varié par addition de soude NaOH en quantité contrôlée, du pH naturel 1,3 imposé par le tensioactif jusqu'à pH 10.

Les 30 échantillons sont ensuite analysés à 25°C et à 50°C. On regarde aux deux températures, si il y a une microémulsion Winsor III ou pas, et on en mesure le volume Vµe, qui est transformé en pourcentage volumique de microémulsion comme précédemment.

Le Tableau 4 ci-dessous montre le pourcentage de phase Winsor III (valeur Φ) générée à une température de 25°C :

**Tableau 4**

| | | **Salinité (g/l)** | | | | |
|---|---|---|---|---|---|---|
| | | **25** | **50** | **75** | **100** | **125** |
| **pH** | **1,3** | 1,3 | 12,5 | 13,4 | 12,4 | 10,6 |
| | **2** | 0,4 | 0,2 | 12,7 | 12,4 | 10,7 |
| | **3** | 1,5 | 0,9 | 20,6 | 17,7 | 15,1 |
| | **7** | 4,1 | 0,3 | 2,3 | 12,5 | 11,9 |
| | **8** | 0,3 | 0,5 | 2,6 | 13,4 | 14,2 |
| | **9** | 2,8 | 3,0 | 4,5 | 15,0 | 13,3 |

Les volumes de microémulsions générés permettent d'estimer la tension interfaciale eau/huile à 10⁻² mN/m à 25°C.

Le Tableau 5 ci-dessous montre le pourcentage de phase Winsor III (valeur Φ) générée à une température de 50°C :

**Tableau 5**

| | | **Salinité (g/l)** | | | | |
|---|---|---|---|---|---|---|
| | | **25** | **50** | **75** | **100** | **125** |
| **pH** | **2** | 12,2 | 10,5 | 9,6 | 9,4 | 8,4 |
| | **2,5** | 13,7 | 13,4 | 11,7 | 10,9 | 10,1 |
| | **3** | 14,7 | 13,9 | 12,0 | 9,9 | 10,6 |
| | **8** | 10,9 | 11,6 | 10,6 | 10,9 | 9,5 |
| | **9** | 12,4 | 11,0 | 9,9 | 9,9 | 9,8 |
| | **10** | 12,5 | 12,9 | 12,7 | 11,6 | 11,9 |

Les volumes de microémulsions générés permettent d'estimer la tension interfaciale eau/huile à 10⁻² mN/m à 50°C.

On observe que lorsque l'on augmente la température on obtient une microémulsion sur une large gamme de pH et de sel. On accède en particulier à des microémulsions dans une gamme de pH proche de la neutralité ce qui évite d'avoir à formuler dans des conditions acides qui posent des problèmes de corrosion.

## Revendications

1. Utilisation d'au moins un ester phosphate de formule (I) et/ou (II) suivantes :
RO(C₃H₆O)ₓ-(C₂H₄O)_{y}-P(=O)(OM)₂ (I)
et/ou
[RO(C₃H₆O)ₓ-(C₂H₄O)_{y}]₂-P(=O)(OM) (II)
dans lesquelles :
- R est une chaîne hydrocarbonée aliphatique, linéaire ou branchée, cyclique ou aromatique, saturée ou insaturée, pouvant comprendre des hétéroatomes.
- x est compris en moyenne entre 0 et 20,
- y est compris en moyenne entre 3 et 9,
- M est H, un métal alcalin tel que Na ou K, ou une base organique ;
en tant que tensioactif dans la technique de récupération assistée du pétrole.

2. Utilisation selon la revendication 1, **caractérisé en ce que** l'on utilise un monoalkyl ester phosphate de formule (I), un dialkyl ester phosphate de formule (II) ou un mélange des composés de formules (I) et (II).

3. Utilisation selon la revendication 1 ou 2, **caractérisé en ce que** l'on utilise un ratio en poids de monoalkyl ester phosphate de formule (I) par rapport au dialkyl ester phosphate de formule (II) généralement compris entre 80/20 et 20/80.

4. Utilisation selon l'une quelconque des revendications 1 à 3, **caractérisé en ce que** l'on utilise plusieurs monoalkyl esters phosphates de formule (I), ou plusieurs dialkyl esters phosphates de formule (II) ou un mélange de ces composés de formules (I) et (II).

5. Utilisation selon l'une quelconque des revendications 1 à 4, **caractérisé en ce que** la chaîne hydrocarbonée R est du type alkyle, alkényle, cycloalkyle, aryle, alkyle aryle, aryle alkyle.

6. Utilisation selon l'une quelconque des revendications 1 à 5, **caractérisé en ce que** x est compris entre 0 et 10.

7. Utilisation selon l'une quelconque des revendications 1 à 6, **caractérisé en ce que** x est compris entre 0 et 4.

8. Utilisation selon l'une quelconque des revendications 1 à 7, **caractérisé en ce que** les alkyl esters phosphates sont choisis dans le groupe comprenant les composés de formule (I) et/ou (II) mentionnés dans le tableau suivant :
| | **R** | **x** | **y** | **M** |
|---|---|---|---|---|
| 1 | isotridecyl | 0 | 5,7 | H |
| 2 | isotridecyl | 0 | 9,0 | H |
| 3 | isotridecyl | 0 | 3,0 | H |
| 4 | C9 | 0 | 4,4 | H |
| 5 | C10 | 0 | 5,4 | H |
| 6 | isotridecyl | 2 | 9 | H |
| 7 | C16-C18 | 0 | 5 | triéthanolamine |
| 8 | isotridecyl | 2 | 6 | H |

9. Méthode de récupération assistée du pétrole d'une formation souterraine dans laquelle on injecte dans ladite formation un fluide comprenant au moins un tensioactif de type ester phosphate de formule (I) et/ou (II) tel que défini selon l'une quelconque des revendications 1 à 8, et l'on conduit ledit fluide à travers cette formation pour déplacer le pétrole de la formation et le récupérer.

10. Méthode de récupération assistée du pétrole d'une formation souterraine comprenant au moins les étapes suivantes :
a) on injecte, par au moins un moyen d'injection en contact avec la formation souterraine, un liquide comprenant au moins :
- i) un milieu aqueux,
- ii) un tensioactif de type ester phosphate de formule (I) et/ou (II) selon l'une quelconque des revendications 1 à 8, et
- iii) éventuellement un co-tensioactif,
b) on récupère, par au moins un moyen de production, ledit liquide comprenant le pétrole.

11. Méthode selon la revendication 10, **caractérisée en ce que** le milieu aqueux est de l'eau de mer naturelle.

12. Méthode selon la revendication 10 ou 11, **caractérisée en ce qu'**elle comprend des 0,05 à 5 % en poids de tensioactifs de type ester phosphate de formule (I) et/ou (II).

13. Méthode selon l'une quelconque des revendications 10 à 12, **caractérisée en ce qu'**elle comprend un co-tensioactif de type alcool.

14. Méthode selon la revendication 13, **caractérisée en ce que** le co-tensioactif de type alcool est choisi dans le groupe comprenant les alcools aliphatiques linéaire ou ramifiée, les alcools éthoxylés, les alcools éthoxylés sulfatés, les alcools éthoxylés sulfonatés, les phénols éthoxylés, et les phénols éthoxylés sulfatés.

15. Méthode selon l'une quelconque des revendications 10 à 14, **caractérisée en ce qu'**elle comprend un polymère viscosant.

## Patentansprüche

1. Verwendung mindestens eines Phosphatesters der folgenden Formel (I) und/oder (II):
RO (C₃H₆O)ₓ-(C₂H₄O)_{y}-P(=O)(OM)₂ (I)
und/oder
[RO(C₃H₆O)ₓ-(C₂H₄O)_{y}]₂-P(=O)(OM) (II)
worin:
- R für eine gesättigte oder ungesättigte, aliphatische, lineare oder verzweigte, cyclische oder aromatische Kohlenwasserstoffkette,
die Heteroatome enthalten kann, steht,
- x durchschnittlich zwischen 0 und 20 liegt,
- y durchschnittlich zwischen 3 und 9 liegt,
- M für H, ein Alkalimetall wie Na oder K oder eine organische Base steht;
als Tensid bei der Technik der tertiären Erdölgewinnung.

2. Verwendung nach Anspruch 1, **dadurch gekennzeichnet, dass** man einen Monoalkylphosphatester der Formel (I), einen Dialkylphosphatester der Formel (II) oder eine Mischung von Verbindungen der Formeln (I) und (II) verwendet.

3. Verwendung nach Anspruch 1 oder 2, **dadurch gekennzeichnet, dass** man ein Gewichtsverhältnis von Monoalkylphosphatester der Formel (I) zu Dialkylphosphatester der Formel (II) verwendet, das im Allgemeinen zwischen 80/20 und 20/80 liegt.

4. Verwendung nach einem der Ansprüche 1 bis 3, **dadurch gekennzeichnet, dass** man mehrere Monoalkylphosphatester der Formel (I) oder mehrere Dialkylphosphatester der Formel (II) oder eine Mischung dieser Verbindungen der Formeln (I) und (II) verwendet.

5. Verwendung nach einem der Ansprüche 1 bis 4, **dadurch gekennzeichnet, dass** die Kohlenwasserstoffkette R vom Alkyl-, Alkenyl-, Cycloalkyl-, Aryl-, Alkylaryl- oder Arylalkyltyp ist.

6. Verwendung nach einem der Ansprüche 1 bis 5, **dadurch gekennzeichnet, dass** x zwischen 0 und 10 liegt.

7. Verwendung nach einem der Ansprüche 1 bis 6, **dadurch gekennzeichnet, dass** x zwischen 0 und 4 liegt.

8. Verwendung nach einem der Ansprüche 1 bis 7, **dadurch gekennzeichnet, dass** die Alkylphosphatester aus der Gruppe umfassend die in der folgenden Tabelle aufgeführten Verbindungen der Formel (I) und/oder (II) ausgewählt werden:
| | **R** | **x** | **y** | **M** |
|---|---|---|---|---|
| 1 | Isotridecyl | 0 | 5,7 | H |
| 2 | Isotridecyl | 0 | 9,0 | H |
| 3 | Isotridecyl | 0 | 3,0 | H |
| 4 | C₉ | 0 | 4,4 | H |
| 5 | C₁₀ | 0 | 5,4 | H |
| 6 | Isotridecyl | 2 | 9 | H |
| 7 | C₁₆-C₁₈ | 0 | 5 | Triethanolamin |
| 8 | Isotridecyl | 2 | 6 | H |

9. Verfahren zur tertiären Erdölgewinnung aus einer unterirdischen Formation, bei dem man in die Formation ein Fluid, das mindestens ein Tensid vom Phosphatestertyp der Formel (I) und/oder (II) gemäß einem der Ansprüche 1 bis 8 umfasst, einpresst und das Fluid durch diese Formation leitet, um das Erdöl aus der Formation zu verdrängen und zurückzugewinnen.

10. Verfahren zur tertiären Erdölgewinnung aus einer unterirdischen Formation, das mindestens die folgenden Schritte umfasst:
a) man presst mit Hilfe mindestens eines Einpressmittels in Kontakt mit der unterirdischen Formation eine Flüssigkeit ein, die mindestens Folgendes umfasst:
- i) ein wässriges Medium,
- ii) ein Tensid vom Phosphatestertyp der Formel (I) und/oder (II) gemäß einem der Ansprüche 1 bis 8 und
- iii) gegebenenfalls ein Cotensid,
b) man gewinnt die Erdöl enthaltende Flüssigkeit mit Hilfe mindestens eines Fördermittels.

11. Verfahren nach Anspruch 10, **dadurch gekennzeichnet, dass** es sich bei dem wässrigen Medium um natürliches Meerwasser handelt.

12. Verfahren nach Anspruch 10 oder 11, **dadurch gekennzeichnet, dass** es 0,05 bis 5 Gew.-% Tenside vom Phosphatestertyp der Formel (I) und/oder (II) umfasst.

13. Verfahren nach einem der Ansprüche 10 bis 12, **dadurch gekennzeichnet, dass** es ein Cotensid vom Alkoholtyp umfasst.

14. Verfahren nach Anspruch 13, **dadurch gekennzeichnet, dass** das Cotensid vom Alkoholtyp aus der Gruppe umfassend lineare oder verzweigte aliphatische Alkohole, ethoxylierte Alkohole, sulfatierte ethoxylierte Alkohole, sulfonierte ethoxylierte Alkohole, ethoxylierte Phenole und sulfatierte ethoxylierte Phenole ausgewählt wird.

15. Verfahren nach einem der Ansprüche 10 bis 14, **dadurch gekennzeichnet, dass** es ein viskositätserhöhendes Polymer umfasst.

## Claims

1. Use of at least one ester phosphate of formula (I) and/or (II) below:
RO(C₃H₆O)ₓ-(C₂H₄O)_{y}-P(=O)(OM)₂ (I)
and/or
[RO(C₃H₆O)ₓ-(C₂H₄O)_{y}]₂-P(=O)(OM) (II)
in which:
- R is a saturated or unsaturated, cyclic or aromatic, linear or branched aliphatic hydrocarbon-based chain, possibly comprising heteroatoms,
- x is on average between 0 and 20,
- y is on average between 3 and 9,
- M is H, an alkali metal such as Na or K, or an organic base;
as a surfactant in the enhanced oil recovery technique.

2. Use according to Claim 1, **characterized in that** a monoalkyl ester phosphate of formula (I), a dialkyl ester phosphate of formula (II) or a mixture of compounds of formulae (I) and (II) is used.

3. Use according to Claim 1 or 2, **characterized in that** a weight ratio of monoalkyl ester phosphate of formula (I) relative to the dialkyl ester phosphate of formula (II) generally of between 80/20 and 20/80 is used.

4. Use according to any one of Claims 1 to 3, **characterized in that** several monoalkyl ester phosphates of formula (I), or several dialkyl ester phosphates of formula (II) or a mixture of these compounds of formulae (I) and (II) are used.

5. Use according to any one of Claims 1 to 4, **characterized in that** the hydrocarbon-based chain R is of the alkyl, alkenyl, cycloalkyl, aryl, alkylaryl or arylalkyl type.

6. Use according to any one of Claims 1 to 5, **characterized in that** x is between 0 and 10.

7. Use according to any one of Claims 1 to 6, **characterized in that** x is between 0 and 4.

8. Use according to any one of Claims 1 to 7, **characterized in that** the alkyl ester phosphates are chosen from the group comprising the compounds of formula (I) and/or (II) mentioned in the following table:
| | **R** | **x** | **y** | **M** |
|---|---|---|---|---|
| 1 | isotridecyl | 0 | 5.7 | H |
| 2 | isotridecyl | 0 | 9.0 | H |
| 3 | isotridecyl | 0 | 3.0 | H |
| 4 | C9 | 0 | 4.4 | H |
| 5 | C10 | 0 | 5.4 | H |
| 6 | isotridecyl | 2 | 9 | H |
| 7 | C16-C18 | 0 | 5 | triethanolamine |
| 8 | isotridecyl | 2 | 6 | H |

9. Method for the enhanced recovery of oil from an underground formation, in which a fluid comprising at least one surfactant of ester phosphate type of formula (I) and/or (II) as defined according to any one of Claims 1 to 8 is injected into said formation, and said fluid is conveyed through this formation to displace the oil from the formation and recover it.

10. Method for the enhanced recovery of oil from an underground formation, comprising at least the following steps:
a) a liquid comprising at least:
- i) an aqueous medium,
- ii) a surfactant of phosphate ester type of formula (I) and/or (II) according to any one of Claims 1 to 8, and
- iii) optionally a co-surfactant
is injected, via at least one injection means in contact with the underground formation,
b) said liquid comprising the oil is recovered, via at least one production means.

11. Method according to Claim 10, **characterized in that** the aqueous medium is natural seawater.

12. Method according to Claim 10 or 11, **characterized in that** it comprises from 0.05% to 5% by weight of surfactants of ester phosphate type of formula (I) and/or (II).

13. Method according to any one of Claims 10 to 12, **characterized in that** it comprises a co-surfactant of alcohol type.

14. Method according to Claim 13, **characterized in that** the co-surfactant of alcohol type is chosen from the group comprising linear or branched aliphatic alcohols, ethoxylated alcohols, ethoxylated alcohol sulfates, ethoxylated alcohol sulfonates, ethoxylated phenols and ethoxylated phenol sulfates.

15. The formulation according to any one of Claims 10 to 14, **characterized in that** it comprises a viscosityenhancing polymer.
